# EUROPÄISCHE PATENTSCHRIFT

(11) **EP 1 138 632 B1**
(45) Veröffentlichungstag und Bekanntmachung des Hinweises auf die Patenterteilung: **14.10.2009**
(21) Anmeldenummer: 00106687.7
(22) Anmeldetag: 29.03.2000
(51) Int. Cl.: C01B 13/24, C01G 23/07, C09C 1/36, B01J 35/00, B01J 21/06, C02F 1/72, B01D 53/86

(54) **Dotiertes Titandioxid**
Doped titanium dioxide
Oxyde de titane dopée

(43) Veröffentlichungstag der Anmeldung: 04.10.2001
(73) Patentinhaber: Evonik Degussa GmbH, 45128 Essen (DE)
(72) Erfinder: Geissen, Sven-Uwe, Dr., 38678 Clausthal-Zellerfeld (DE); Hemme, Ina, Dr., 63450 Hanau (DE); Mangold, Helmut, Dr., 63517 Rodenbach (DE); Moiseev, Anna, 38678 Clausthal-Zellerfeld (DE)

(56) Entgegenhaltungen:
- EP-A- 0 595 078
- EP-A- 0 850 876
- US-A- 5 698 177
- FORMENTI M ET AL: "PREPARATION IN A HYDROGEN-OXYGEN FLAME OF ULTRAFINE METAL OXIDE PARTICLES. OXIDATIVE PROPERTIES TOWARD HYDROCARBONS IN THE PRESENCE OF ULTRAVIOLET RADIATION" JOURNAL OF COLLOID AND INTERFACE SCIENCE,US,ACADEMIC PRESS, NEW YORK, NY, Bd. 39, Nr. 1, 1. April 1972 (1972-04-01), Seiten 79-89, XP002053084 ISSN: 0021-9797
- BICKLEY R I ET AL: "CHARACTERISATION OF IRON/TITANIUM OXIDE PHOTOCATALYSTS PART 2.- SURFACE STUDIES" JOURNAL OF THE CHEMICAL SOCIETY. FARADAY TRANSACTIONS,GB,ROYAL SOCIETY OF CHEMISTRY, CAMBRIDGE, Bd. 90, Nr. 15, 7. August 1994 (1994-08-07), Seiten 2257-2264, XP000456264 ISSN: 0956-5000

## Beschreibung

Die Erfindung betrifft dotiertes Titandioxid, ein Verfahren zu seiner Herstellung sowie seine Verwendung.

Pyrogenes Titanoxid (kommerziell erhältlich als Degussa TiO2 P 25) zeichnet sich durch seine vielfältigen Anwendungsmöglichkeiten im Bereich der Photokatalyse aus.

(R.W. Matthews, S.R. McEvoy, J. Photochem. Photobiol.A: Chem., 64 (1992) 231-246.;

R.I. Bickley et.al., Journal of Solid State Chemistry, 92 (1991), 178-190.;

R. Franke, C. Franke, Chemosphere, Vol. 39, No. 15 (1999), 2651-2659.

H. Zen, JETI (1998), 46 (10), 66-67.

Es wird als Vergleichsmaterial mit hoher photokatalytischer Aktivität benutzt.

(V. Loddo et.al., Applied Catalysis B: Environmental 20 (1999), 29 - 45.)

Gegenstand der Erfindung ist ein mittels Aerosol dotiertes pyrogen mittels Flammenhydrolyse hergestelltes Titandioxid mit einer BET-Oberfläche von 65 bis 80 m²/g, welches ein Oxid aus der Gruppe Zinkoxid, Platinoxid, Magnesiumoxid und/oder Aluminiumoxid als Dotierungskomponente in einer Menge von 40 bis 800 ppm enthält.

Ein weiterer Gegenstand der Erfindung ist ein Verfahren zur Herstellung des mittels Aerosol dotierten Titandioxides, welches dadurch gekennzeichnet ist, dass man in eine Flamme, wie sie zur Herstellung von pyrogenem Titandioxid mittels Flammenhydrolyse verwendet wird, ein Aerosol einspeist, dieses Aerosol vor oder während der Reaktion mit dem Gasgemisch der Flammenhydrolyse homogen mischt, das Aerosol-Gasgemisch in einer Flamme abreagieren lässt und die entstandenen dotierten pyrogen hergestellten Oxide in bekannter Weise von dem Gasstrom abtrennt, wobei als Ausgangsprodukt des Aerosols eine Salzlösung oder Suspension, die die Komponente der zu dotierenden Substanz, die ein Metallsalz-oder Metalloidsalz oder Mischungen von beiden oder eine Suspension einer unlöslichen Metall- oder Metalloidverbindung oder einer Mischung aus beiden sein kann, enthält, dient, wobei das Aerosol durch Vernebelung mittels einer Zweistoffdüse oder durch einen Aerosolgenerator vorzugsweise nach der Ultraschallvernebelung hergestellt wird.

Als zu dotierende Substanz können Salze von Zink, Magnesium, Aluminium und/oder Edelmetallen wie Platin, Palladium, Silber, Gold eingesetzt werden. Bevorzugt können wässrige Lösungen dieser Salze, die gegebenenfalls angesäuert sein können, eingesetzt werden. Bevorzugt können als Salze Zinkchlorid, Hexachloroplatinsäure, Magnesiumchlorid, Aluminiumchlorid eingesetzt werden.

Das Verfahren der Dotierung mittels Aerosol kann im wesentlichen so durchgeführt werden, wie es in dem Dokument EP 0 850 876 A1 beschrieben wird.

Das Verfahren zu der Flammenhydrolyse zur Herstellung von pyrogenen Titandioxid ist bekannt aus Ullmann's Enzyklopädie der technischen Chemie, 4 Auflage, Band 21, Seite 464.

Zur Erzeugung einer erhöhten photokatalytischen Aktivität beträgt die BET-Oberfläche von 65 bis 80 m²/g. Dabei beträgt die Menge der Dotierungskomponente 40 bis 800 ppm.

Die erfindungsgemäßen, mittels Aerosol dotierten Titandioxide können, wenn sie eine erhöhte photokatalytische Aktivität aufweisen, zur Reinigung von Abluft eingesetzt werden.

Sie können auf einem Träger fixiert sein.

Die erfindungsgemäßen Titandioxide können, wenn sie eine erhöhte photokatalytische Aktivität aufweisen, zum Abbau von Verunreinigungen in Abwässern und/oder Abluft eingesetzt werden. Dabei können die Titandioxide sowohl in dem Abwasser und/oder der Abluft suspendiert als auch auf einem Träger fixiert eingesetzt werden.

Auch bei einer erhöhten photokatalytischen Aktivität können die erfindungsgemäßen Titandioxide zum Auftragen auf Gläser, auf Kunststoffe, zum Entfernen von Verunreinigungen aus Luft, Wasser etc. eingesetzt werden.

Die erfindungsgemäßen Titandioxide mit erhöhter photokatalytischer Aktivität können weiterhin zur Sterilisierung von Wasser unter UV-Bestrahlung eingesetzt werden.

Die erfindungsgemäßen mittels Aerosol dotierten Titandioxide werden bei dem photokatalytischen Abbau von chlorierten Kohlenwasserstoffen unter UV-Bestrahlung in gegebenenfalls angesäuerter, wässriger Suspension auf ihre photokatalytische Aktivität getestet.

Dabei wird gefunden, dass die photokatalytische Aktivität der erfindungsgemäßen Titandioxide in gegebenenfalls angesäuerter wässriger Suspension durch die Dotierung mit Oxiden von Metallen/Edelmetallen oder Metalloiden erhöht werden kann.

Überraschenderweise wird die photokatalytische Aktivität beim Abbau von chlorierten Kohlenwasserstoffen in wässriger Suspension erhöht, obwohl eine homogene Durchmischung von Dotierungskomponente und Titandioxid stattgefunden hat. Die Dotierungskomponente befindet sich hier also nicht ausschließlich auf dem Titandioxid, sondern auch in dem Titandioxid.

Darüber hinaus führt die Änderung der Menge der Dotierungskomponente zu einer Veränderung der Geschwindigkeit des photokatalytischen Abbaus der chlorierten Kohlenwasserstoffe unter UV-Bestrahlung.

### Beispiele:

Es werden die Anfangsreaktionsgeschwindigkeiten (nach den ersten 30 Minuten) ausgewählter dotierter Titandioxid-Katalysatoren [mg TOC* 1-1min-1 (TOC = Total Organic Carbon = organisch gebundener Kohlenstoff)] von DCA (Dichloressigsäure) und 4-CP (4-Chlorphenol) in einer gegebenenfalls angesäuerten wässrigen Suspension unter UV-Bestrahlung gemessen.

Als Vergleichswert (Nullwert) wird die photokatalytische Abbaugeschwindigkeit von chlorierten Kohlenwasserstoffen unter UV-Bestrahlung in gegebenenfalls angesäuerter wässriger Suspension beim Einsatz von reinem Titandioxid Degussa P 25 als Photokatalysator benutzt. Die Dauer der Versuche mit Degussa P 25 beträgt maximal 360 Minuten. Die Anfangsreaktionsgeschwindigkeit des photokatalytischen Abbaus von chlorierten Kohlenwasserstoffen in gegebenenfalls angesäuerter wässriger Suspension wird bestimmt.

Ebenfalls wird der photokatalytische Abbau von chlorierten Kohlenwasserstoffen unter UV-Bestrahlung in rein wässriger oder angesäuerter wässriger Suspension, also ohne Zusatz von Titandioxid, über einige Stunden (max. 360 Minuten = min.) verfolgt.

Die Ergebnisse der Anfangsreaktionsgeschwindigkeit und die Ergebnisse zum photokatalytischen Abbau von chlorierten Kohlenwasserstoffen in rein wässriger oder angesäuerter Suspension sind in Tabelle 3, Tabelle 4 und Tabelle 5 aufgeführt.

Eine besonders hohe Anfangsreaktionsgeschwindigkeit des Abbaus von Dichloressigsäure und 4-Chlorphenol (Anfangskonzentration beider chlorierter Kohlenwasserstoffe: c= 120 mg/l) in rein wässriger oder angesäuerter wässriger Suspension unter UV-Bestrahlung weisen Dotierungen mit Al₂O₃, PtO₂ oder MgO im Vergleich mit Degussa P 25 auf (siehe Tabelle 5).

Wird ZnO als Dotierungssubstanz benutzt, dann werden je nach BET-Oberfläche und Dotierungsmenge unterschiedliche Effekte erzielt.

Bei einer BET-Oberfläche von 78 m²/g und einer ZnO-Dotierungsmenge von 430 ± 20 ppm wird die Anfangsreaktionsgeschwindigkeit der Dichloressigsäure- und des 4-Chlorphenol-Abbaus in rein wässriger oder angesäuerter wässriger Suspension unter UV-Bestrahlung im Vergleich mit Degussa P 25 stark heraufgesetzt.

Bei einer BET-Oberfläche von 56 m²/g und einer ZnO-Dotierungsmenge von 0,13 (±0,02)% wird die Anfangsreaktionsgeschwindigkeit beim Abbau von Dichloressigsäure in rein wässriger oder angesäuerter wässriger Suspension unter UV-Bestrahlung nur um 29 % verglichen mit Degussa P 25 erhöht.

Bei dem Abbau von 4-Chlorphenol wird die Anfangsreaktionsgeschwindigkeit in rein wässriger oder angesäuerter wässriger Suspension unter UV-Bestrahlung um 31 % im Vergleich mit Degussa P 25 vermindert (siehe Tabelle 5).

Es wird darüber hinaus auch ein reines TiO₂ mit einer BET-Oberfläche von 82 m²/g als Photokatalysator getestet, um auszuschließen, dass die Erhöhung der Anfangsreaktionsgeschwindigkeit des photokatalytischen Abbaus von 4-Chlorphenol und Dichloressigsäure in rein wässriger oder angesäuerter wässriger Suspension unter UV-Bestrahlung, im Vergleich mit Degussa Titanoxid P 25, ausschließlich auf der Oberflächenerhöhung beruht.

Durch die Erhöhung der Oberfläche kommt es zwar zu einem erhöhten photokatalytischen Abbau von 4-Chlorphenol und Dichloressigsäure, aber nicht in dem Masse, wie Dotierungen es bewirken (siehe Tabelle 5).

Herstellung der dotierten Titandioxide

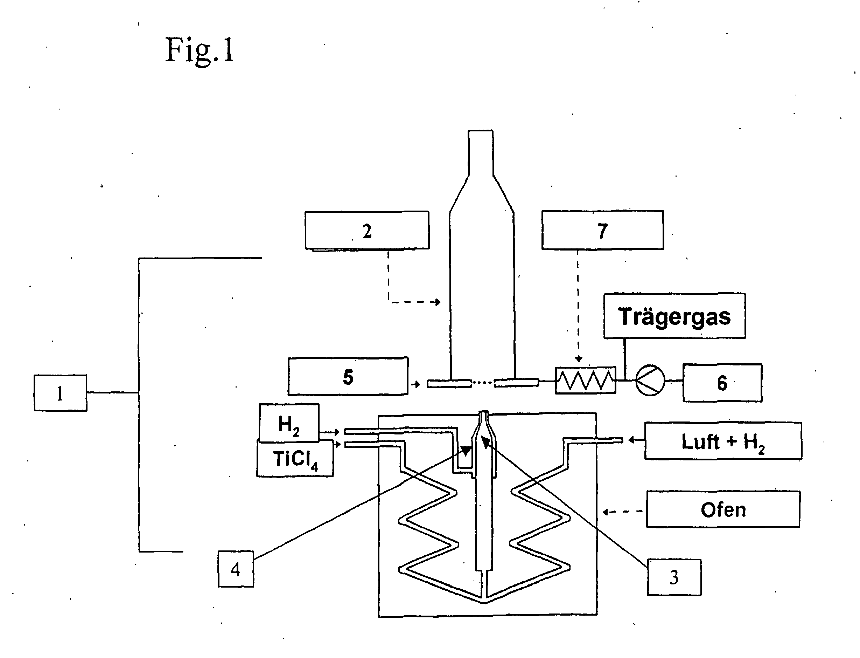

Die Brenneranordnung, die in den Beispielen 1 - 6 verwendet wird, ist in Figur 1 schematisch dargestellt.

Gemäss Figur 1 ist das Kernstück der Apparatur der offene Brenner (1) bekannter Bauart, wie er üblicherweise zur Herstellung von pyrogenen Oxiden verwendet wird. Der Brenner (1) besteht aus einer inneren Düse (3), aus der der Hauptgasstrom in das Flammrohr (2) strömt und abbrennt. Die innere Düse (3) ist von einer weiteren Düse (4) (Manteldüse), aus der zur Vermeidung von Anbackungen Ring-oder Sekundär-Wasserstoff ausströmt, umgeben. Zwischen dem Düsenausgang und dem Flammrohr wird eine Blende (5) angebracht, durch die das Aerosol eingespeist wird, wobei der Aerosol-Gasstrom aus der Blende mit dem Gasstrom der inneren Düse und der Manteldrüse homogen gemischt wird. Das Aerosol wird in einem Aerosol-Generator (6) (Ultraschallvernebler) erzeugt. Als Aerosol-Edukt wird eine wässrige Salzlösung, die das zu dotierende Metall/Edelmetall oder Metalloid als Salz oder Chlorosäure in gelöster oder dispergierter/suspendierter Form enthält, verwendet.

Das vom Aerosol-Generator (6) erzeugte Aerosol wird mittels eines Traggasstroms durch die Heizzone (7), in der das Wasser verdampft und in der Gasphase kleine Salzkristallite in feinverteilter Form zurückbleiben, geleitet.

Die einzelnen Bedingungen der Herstellung der Oxide sind in der Tabelle 1 aufgeführt.

### Beispiel 1 (Dotierung mit Al₂O₃)

Es werden 0,66 kg/h TiCl₄ bei 280°C verdampft und in das Zentralrohr des Brenners eingeführt. In das Zentralrohr werden zusätzlich 0,54 Nm³/h Wasserstoff und 3,41 Nm³/h Luft eingespeist. Das Gasgemisch strömt aus der inneren Düse des Brenners und brennt, da es sich um einen offenen Brenner handelt, in das Flammrohr. In die Manteldüse, die die Zentraldüse umgibt, werden zur Vermeidung von Anbackungen an den Düsen 0,23 Nm³/h Mantel- oder Sekundärwasserstoff eingespeist.

Aus der Blende (Durchmesser: 35 mm; Schlitzbreite: 0,4mm), die sich zwischen dem Ausgang des Brennerkopfes und dem Flammrohr in waagerechter Anordnung befindet, wird das Aerosol aufgebracht. Das Aerosol ist ein Aluminiumchloridsalz-Aerosol, das durch Ultraschallverneblung einer 1 %igen wässrigen AlCl₃x6H₂O-Lösung im Aerosol-Generator in einer Menge von 126 g/h erzeugt wird. Das Aluminiumsalz-Aerosol wird mit Hilfe des Traggases von 0,04 Nm³/h Stickstoff durch eine beheizte Leitung geführt, wobei das Aerosol bei Temperaturen um ca. 215 °C in ein Gas und ein Salzkristall-Aerosol übergeht.

Die Reaktionsgase, zusätzliche, durch den offenen Brenner angesaugte Luft aus der Umgebung und das entstandene mit Al₂O₃ dotierte, pyrogen hergestellte Titandioxid werden mittels Unterdruck durch das Kühlsystem gesaugt und dabei auf 100 - 160 °C abgekühlt. Mittels Filter oder Zyklon wird der Feststoff vor dem Gasstrom abgetrennt. Das erhaltene, mit Al₂O₃ dotierte, pyrogen hergestellte Titandioxid ist ein weißes feinteiliges Pulver.

In einem anschließenden Schritt werden bei erhöhter Temperatur durch Behandlung mit wasserdampfhaltiger Luft die anhaftenden Salzsäurereste von dem Titandioxid entfernt. Die BET-Oberfläche dieses dotierten, pyrogen hergestellten Titandioxids beträgt 75 m²/g. Weitere analytische Daten sind in Tabelle 2 aufgeführt.

### Beispiel 2 (Dotierung mit PtO₂)

Es werden 0,65 kg/h TiCl₄ bei 280 °C verdampft und in das Zentralrohr des Brenners eingeführt. In das Zentralrohr werden zusätzlich 0,54 Nm³/h Wasserstoff und 3,41 Nm³/h Luft eingespeist. Das Gasgemisch strömt aus der inneren Düse des Brenners und brennt, da es sich um einen offenen Brenner handelt, in das Flammrohr. In die Manteldüse, die die Zentraldüse umgibt, werden zur Vermeidung von Anbackungen an den Düsen 0,23 Nm³/h Mantel- oder Sekundärwasserstoff eingespeist.

Aus der Blende (Durchmesser: 35 mm; Schlitzbreite: 0,4mm), die sich zwischen dem Ausgang des Brennerkopfes und dem Flammrohr in waagerechter Anordnung befindet, wird das Aerosol aufgebracht. Das Aerosol ist ein Hexachloroplatinsäure-Aerosol, das durch Ultraschallverneblung einer 0,5 %igen wässrigen H₂PtCl₆-Lösung im Aerosol-Generator in einer Menge von 27,0 g/h erzeugt wird. Das Hexachloroplatinsäure-Aerosol wird mit Hilfe des Traggases von 0,04 Nm³ /h Stickstoff durch eine beheizte Leitung geführt, wobei das Aerosol bei Temperaturen um ca. 344 °C in ein Gas und ein Salzkristall-Aerosol übergeht.

Die Reaktionsgase, zusätzliche, durch den offenen Brenner angesaugte Luft aus der Umgebung und das entstandene, mit PtO₂ dotierte, pyrogen hergestellte Titandioxid werden mittels Unterdruck durch ein Kühlsystem gesaugt und dabei auf 100 - 160 °C abgekühlt. Mittels Filter oder Zyklon wird der Feststoff von dem Gasstrom abgetrennt. Das mit PtO₂ dotierte, pyrogen hergestellte Titandioxid ist ein weißes feinteiliges Pulver.

In einem anschließenden Schritt werden bei erhöhter Temperatur durch Behandlung mit wasserdampfhaltiger Luft die anhaftenden Salzsäurereste von dem Titandioxid entfernt. Die BET-Oberfläche dieses mit PtO₂ dotierten, pyrogen hergestellten Titandioxids beträgt 73 m²/g. Weitere analytische Daten sind in Tabelle 2 zusammengefasst.

### Beispiel 3 (Dotierung mit MgO)

Es werden 0,66 kg/h TiCl₄ bei 280 °C verdampft und in das Zentralrohr des Brenners eingeführt. In das Zentralrohr werden zusätzlich 0,54 Nm³/h Wasserstoff und 3,41 Nm³/h Luft eingespeist. Das Gasgemisch strömt aus der inneren Düse des Brenners und brennt, da es sich um einen offenen Brenner handelt, in das Flammrohr. In die Manteldüse, die die Zentraldüse umgibt, werden zur Vermeidung von Anbackungen an den Düsen 0,23 Nm³/h Mantel- oder Sekundärwasserstoff eingespeist.

Aus der Blende (Durchmesser: 35 mm; Schlitzbreite: 0,4mm), die sich zwischen dem Ausgang des Brennerkopfes und dem Flammrohr in waagerechter Anordnung befindet, wird das Aerosol aufgebracht. Das Aerosol ist ein Magnesiumchloridsalz-Aerosol, das durch Ultraschallverneblung einer 0,5 %igen wässrigen MgCl₂ x6H₂O-Lösung im Aerosol-Generator in einer Menge von 21,4 g/h erzeugt wird. Das Magnesiumsalz-Aerosol wird mit Hilfe des Traggases von 0,04 Nm³/h Stickstoff durch eine beheizte Leitung geführt, wobei das Aerosol bei Temperaturen um ca. 331 °C in ein Gas und ein Salzkristall-Aerosol übergeht.

Die Reaktionsgase, zusätzliche, durch den offenen Brenner angesaugte Luft aus der Umgebung und das entstandene mit MgO dotierte, pyrogen hergestellte Titandioxid werden mittels Unterdruck durch ein Kühlsystem gesaugt und dabei auf 100 - 160 °C abgekühlt. Mittels Filter oder Zyklon wird der Feststoff von dem Gasstrom abgetrennt. Das mit MgO dotierte, pyrogen hergestellte Titandioxid ist ein weißes feinteiliges Pulver.

In einem anschließenden Schritt werden bei erhöhter Temperatur durch Behandlung mit wasserdampfhaltiger Luft die anhaftenden Salzsäurereste von dem Titandioxid entfernt. Die BET-Oberfläche dieses mit MgO dotierten, pyrogen hergestellten Titandioxids beträgt 77 m²/g. Weitere analytische Daten sind in Tabelle 2 zusammengefasst.

### Beispiel 4 (Dotierung mit ZnO)

Es werden 0,65 kg/h TiCl₄ bei 280 °C verdampft und in das Zentralrohr des Brenners eingeführt. In das Zentralrohr werden zusätzlich 0,54 Nm³/h Wasserstoff und 3,41 Nm³/h Luft eingespeist. Das Gasgemisch strömt aus der inneren Düse des Brenners und brennt, da es sich um einen offenen Brenner handelt, in das Flammrohr. In die Manteldüse, die die Zentraldüse umgibt, werden zur Vermeidung von Anbackungen an den Düsen 0,23 Nm³/h Mantel- oder Sekundärwasserstoff eingespeist.

Aus der Blende (Durchmesser: 35 mm; Schlitzbreite: 0,4mm) , die sich zwischen dem Ausgang des Brennerkopfes und dem Flammrohr in waagerechter Anordnung befindet, wird das Aerosol aufgebracht. Das Aerosol ist ein Zinkchloridsalz-Aerosol, das durch Ultraschallverneblung einer 3 %igen wässrigen ZnCl₂-Lösung im Aerosol-Generator mit einer Menge von 31,7 g/h erzeugt wird. Das Zinksalz-Aerosol wird mit Hilfe des Traggases von 0,04 Nm³ /h Stickstoff durch eine beheizte Leitung geführt, wobei das Aerosol bei Temperaturen um ca. 303 °C in ein Gas und ein Salzkristall-Aerosol übergeht.

Die Reaktionsgase, zusätzliche, durch den offenen Brenner angesaugte Luft aus der Umgebung und das entstandene mit ZnO dotierte, pyrogen hergestellte Titandioxid werden mittels Unterdruck durch ein Kühlsystem gesaugt und dabei auf 100 - 160 °C abgekühlt. Mittels Filter oder Zyklon wird der Feststoff von dem Gasstrom abgetrennt. Das mit ZnO dotierte, pyrogen hergestellte Titandioxid ist ein weißes feinteiliges Pulver.

In einem anschließenden Schritt werden bei erhöhter Temperatur durch Behandlung mit wasserdampfhaltiger Luft die anhaftenden Salzsäurereste von dem Titandioxid entfernt. Die BET-Oberfläche dieses mit ZnO dotierten, pyrogen hergestellten Titandioxids beträgt 78 m²/g. Weitere analytische Daten sind in Tabelle 2 zusammengefasst.

### Beispiel 5 (Dotierung mit ZnO) (Vergleichsbeispiel)

Es werden 1,32 kg/h TiCl₄ bei 280 °C verdampft und in das Zentralrohr des Brenners eingeführt. In das Zentralrohr werden zusätzlich 0,33 Nm³/h Wasserstoff und 2,68 Nm³/h Luft eingespeist. Das Gasgemisch strömt aus der inneren Düse des Brenners und brennt, da es sich um einen offenen Brenner handelt, in das Flammrohr. In die Manteldüse, die die Zentraldüse umgibt, werden zur Vermeidung von Anbackungen an den Düsen 0,1 Nm³/h Mantel- oder Sekundärwasserstoff eingespeist.

Aus der Blende (Durchmesser: 35 mm; Schlitzbreite: 0,4mm), die sich zwischen dem Ausgang des Brennerkopfes und dem Flammrohr in waagerechter Anordnung befindet, wird das Aerosol aufgebracht. Das Aerosol ist ein Zinkchloridsalz-Aerosol, das durch Ultraschallverneblung einer 2 %igen wässrigen ZnCl₂-Lösung im Aerosol-Generator in einer Menge von 112,6 g/h erzeugt wird. Das Zinksalz-Aerosol wird mit Hilfe des Traggases von 0,04 Nm³/h Stickstoff durch eine beheizte Leitung geführt, wobei das Aerosol bei Temperaturen um ca. 215 °C in ein Gas und ein Salzkristall-Aerosol übergeht.

Die Reaktionsgase, zusätzliche, durch den offenen Brenner angesaugte Umgebungsluft und das entstandene mit ZnO dotierte, pyrogen hergestellte Titandioxid werden mittels Unterdruck durch das Kühlsystem gesaugt und dabei auf 100-160 °C abgekühlt. Mittels Filter oder Zyklon wird der Feststoff von dem Gasstrom abgetrennt. Das mit ZnO dotierte, pyrogen hergestellte Titandioxid ist ein weißes feinteiliges Pulver.

In einem anschließenden Schritt werden bei erhöhter Temperatur durch Behandlung mit wasserdampfhaltiger Luft die anhaftenden Salzsäurereste von dem Titandioxid entfernt. Die BET-Oberfläche dieses mit ZnO dotierten, pyrogen hergestellten Titandioxids beträgt 56 m²/g. Weitere analytische Daten sind in Tabelle 2 zusammengefasst.

### Beispiel 6 Herstellung von TiO₂

Es werden 0,42 kg/h TiCl₄ bei 280 °C verdampft und in das Zentralrohr des Brenners eingeführt. In das Zentralrohr werden zusätzlich 0,21 Nm³/h Wasserstoff, 3,78 Nm³/h Luft und 0,04 Nm³/h Stickstoff eingespeist. Das Gasgemisch strömt aus der inneren Düse des Brenners und brennt, da es sich um einen offenen Brenner handelt, in das Flammrohr. In die Manteldüse, die die Zentraldüse umgibt, werden zur Vermeidung von Anbackungen an den Düsen 0,23 Nm³ /h Mantel-oder Sekundärwasserstoff eingespeist.

Die Reaktionsgase, zusätzliche, durch den offenen Brenner angesaugte Luft aus der Umgebung und das entstandene pyrogen hergestellte Titandioxid werden mittels Unterdruck durch ein Kühlsystem gesaugt und dabei auf 100 - 160 °C abgekühlt. Mittels Filter oder Zyklon wird der Feststoff von dem Gasstrom abgetrennt. Das pyrogen hergestellte, hochoberflächige Titandioxid ist ein weißes feinteiliges Pulver.

In einem anschließenden Schritt werden bei erhöhter Temperatur durch Behandlung mit wasserdampfhaltiger Luft die anhaftenden Salzsäurereste von dem Titandioxid entfernt. Die BET-Oberfläche dieses pyrogen hergestellten Titanoxids beträgt 82 m²/g. Weitere analytische Daten sind in Tabelle 2 zusammengefasst.

Versuchsdurchführung zur Bestimmung der Geschwindigkeit des photokatalytischen Abbaus von chlorierten Kohlenwasserstoffen in Suspension.

Die Gesamtlaufzeit der Versuche zur Überprüfung der Geschwindigkeit des photokatalytischen Abbaus von chlorierten Kohlenwasserstoffen wie 4-Chlorphenol (4-CP) und Dichloressigsäure (DCA) unter UV-Bestrahlung in rein wässriger oder angesäuerter wässriger Suspension liegt bei max. 360 Minuten.

Die Abbaureaktion wird in einem Rührreaktor durchgeführt. Zusätzlich wird die zu untersuchende Suspension von dem Vorratsbehälter zu dem Rührreaktor und zurück gepumpt, so dass eine gleichmäßige UV-Bestrahlung gewährleistet ist. Der pH-Wert der Suspension liegt in dem Bereich von 4 - 7, bevorzugt bei pH = 5. Die Temperatur in dem Rührreaktor liegt in dem Bereich von 25 - 40 °C, bevorzugt zwischen 30 und 35 °C. Die Konzentration des jeweils eingesetzten photokatalytisch aktiven oder wenig aktiven Titandioxids, also reines Titandioxid P 25 oder gemäss Beispiel 6, Tabellen 3 und 4 oder dotiertes Titandioxid wie in Tabellen 3 - 4 beschrieben, beträgt 1 g/l. Die Temperatur wird mittels kontinuierlichem Pumpen von dem Vorratsgefäß zur UV-Bestrahlungseinheit und zurück, sowie durch Kühlung des UV-Lampensystems mittels Kühlwasser in dem genannten Bereich konstant gehalten. Für die gesamte Dauer der Abbaureaktion findet eine kontinuierliche Kontrolle des Abbaufortschrittes der chlorierten Kohlenwasserstoffe unter UV-Bestrahlung statt.

Aus dieser in regelmäßigen Abständen stattfindenden Bestimmung des TOC-Wertes (TOC = Total Organic Carbon = organisch gebundener Kohlenstoff) lässt sich der Faktor TOC/TOC₀ bestimmen (TOC₀ = Anfangskonzentration des organisch gebundenen Kohlenstoffs in Suspension). TOC/TOC₀ gibt den prozentualen TOC-Gehalt zu einem bestimmten Entnahmezeitpunkt an.

In einer TOC/TOC₀-Zeit-Kurve wird der Verlauf des Abbaus von chlorierten Kohlenwasserstoffen aufgetragen. Die Abbaugeschwindigkeit von Degussa P 25 wird als Standard ebenfalls unter den gleichen Bedingungen getestet.

Der Gesamtkurvenverlauf wird aufgenommen.

Es werden weiterhin Blindversuche zum Abbau von 4-Chlorphenol und Dichloressigsäure unter UV-Bestrahlung, aber ohne Zusatz von Titandioxiden durchgeführt.

Wird auf Titandioxid verzichtet, dann liegen die noch vorhandenen TOC/TOC₀-Werte über 89 %, so dass hier nahezu kein Abbau stattfindet.

Versuchsergebnisse des photokatalytischen Abbaus von 4-Chlorphenol.

### Beispiel 7 (Blindversuch)

In das Vorratsgefäß und den Rührreaktor wird nur 4-Chlorphenol in angesäuerter wässriger Lösung gegeben und behandelt. Es wird kein TiO₂ hinzugefügt. Eine TOC/TOC₀-Zeit-Kurve wird aufgenommen. Nach 300 min. sind noch 89,82 % des Anfangs-TOC-Gehaltes vorhanden. Eine Anfangsreaktionsgeschwindigkeit wird nicht bestimmt.

### Beispiel 8 (P 25)

In das Vorratsgefäß und den Rührreaktor werden 4-Chlorphenol und 1 g/l Titandioxid P 25 in angesäuerter wässriger Suspension gegeben und wie oben angegeben behandelt. Eine TOC/TOC₀-Zeit-Kurve wird aufgenommen. Nach 300 min. sind nur noch 20,91 % des Anfangs-TOC-Gehaltes vorhanden. Die Anfangsreaktionsgeschwindigkeit wird als Standard verwendet und als Null angesetzt. Alle bei den Titandioxiden gemäss den Beispielen 9 - 14 erhaltenen Werte beziehen sich auf diesen P 25-Wert.

### Beispiel 9 (Dotierung mit Al₂O₃)

In das Vorratsgefäß und den Rührreaktor werden 4-Chlorphenol und 1 g/l Katalysator gemäss Beispiel 1 in angesäuerter wässriger Suspension gegeben und wie oben angegeben behandelt. Eine TOC/TOC₀-Zeit-Kurve wird aufgenommen. Nach 300 min. sind nur noch 8,36 % des Anfangs-TOC-Gehaltes von dem 4-Chlorphenol vorhanden. Die Anfangsreaktionsgeschwindigkeit ist im Vergleich mit P 25 (Beispiel 8) um 51 % erhöht.

### Beispiel 10 (Dotierung mit PtO₂)

In das Vorratsgefäß und den Rührreaktor werden 4-Chlorphenol und 1 g/l Katalysator gemäss Beispiel 2 in angesäuerter wässriger Suspension gegeben und wie oben angegeben behandelt. Eine TOC/TOC₀-Zeit-Kurve wird aufgenommen. Nach 300 min. sind nur noch 17,73 % des Anfangs-TOC-Gehaltes vom 4-Chlorphenol vorhanden. Die Anfangsreaktionsgeschwindigkeit ist im Vergleich mit P 25 (Beispiel 8) um 26 % erhöht.

### Beispiel 11 (Dotierung mit MgO)

In das Vorratsgefäß und den Rührreaktor werden 4-Chlorphenol und 1 g/l Katalysator gemäss Beispiel 3 in angesäuerter wässriger Suspension gegeben und wie oben angegeben behandelt. Eine TOC/TOC₀-Zeit-Kurve wird aufgenommen. Nach 300 min. sind nur noch 10,91 % des Anfangs-TOC-Gehaltes von dem 4-Chlorphenol vorhanden. Die Anfangsreaktionsgeschwindigkeit ist im Vergleich mit P 25 gemäss Beispiel 8 um 36 % erhöht.

### Beispiel 12 (Dotierung mit ZnO)

In das Vorratsgefäß und den Rührreaktor werden 4-Chlorphenol und 1 g/l Katalysator gemäss Beispiel 4 in angesäuerter wässriger Suspension gegeben und wie oben angegeben behandelt. Eine TOC/TOC₀-Zeit-Kurve wird aufgenommen. Nach 300 min. sind nur noch 9,55 % des Anfangs-TOC-Gehaltes von dem 4-Chlorphenol vorhanden. Die Anfangsreaktionsgeschwindigkeit ist im Vergleich mit P 25 gemäss Beispiel 8 um 36 % erhöht.

### Beispiel 13 (Dotierung mit ZnO) (Vergleichsbeispiel)

In das Vorratsgefäß und den Rührreaktor werden 4-Chlorphenol und 1 g/l Katalysator gemäss Beispiel 5 in angesäuerter wässriger Suspension gegeben und wie oben angegeben behandelt. Eine TOC/TOC₀-Zeit-Kurve wird aufgenommen. Nach 300 min. sind noch 37,65 % des Anfangs-TOC-Gehaltes von dem 4-Chlorphenol vorhanden. Die Anfangsreaktionsgeschwindigkeit ist im Vergleich mit P 25 gemäss Beispiel 8 um 31 % erniedrigt.

### Beispiel 14 (TiO2)

In das Vorratsgefäß und den Rührreaktor werden 4-Chlorphenol und 1 g/l Katalysator gemäss Beispiel 6 in angesäuerter wässriger Suspension gegeben und wie oben angegeben behandelt. Eine TOC/TOC₀-Zeit-Kurve wird aufgenommen. Nach 300 min. sind nur noch 18,18 % des Anfangs-TOC-Gehaltes von dem 4-Chlorphenol vorhanden. Die Anfangsreaktionsgeschwindigkeit ist im Vergleich mit P 25 gemäss Beispiel 8 um 12 % erhöht.

Versuchsergebnisse des photokatalytischen Abbaus von Dichloressigsäure (DCA).

### Beispiel 15 (Blindversuch)

In das Vorratsgefäß und den Rührreaktor wird nur Dichloressigsäure in angesäuerter wässriger Lösung gegeben und wie oben angegeben behandelt. Es wird kein TiO₂ hinzugefügt. Eine TOC/TOC₀-Zeit-Kurve wird aufgenommen. Nach 245 min. sind noch 95,45 % des Anfangs-TOC-Gehaltes vorhanden. Eine Anfangsreaktionsgeschwindigkeit wird nicht bestimmt.

### Beispiel 16 (P 25)

In das Vorratsgefäß und den Rührreaktor werden Dichloressigsäure und 1 g/l Titandioxid P 25 in angesäuerter wässriger Suspension gegeben und wie oben angegeben behandelt. Eine TOC/TOC₀-Zeit-Kurve wird aufgenommen. Nach 245 min. sind 0 % des Anfangs-TOC-Gehaltes vorhanden. Die Anfangsreaktionsgeschwindigkeit wird als Standard verwendet und als Null angesetzt. Alle bei den Titandioxiden gemäss den Beispielen 17 - 22 erhaltenen Werte beziehen sich auf diesen P 25-Wert.

### Beispiel 17 (Dotierung mit Al₂O₃)

In das Vorratsgefäß und den Rührreaktor werden Dichloressigsäure und 1 g/l Katalysator gemäss Beispiel 1 in angesäuerter wässriger Suspension gegeben und wie oben angegeben behandelt. Eine TOC/TOC₀-Zeit-Kurve wird aufgenommen. Nach 201,89 min. waren 0 % des Anfangs-TOC-Gehaltes von der Dichloressigsäure vorhanden. Die Anfangsreaktionsgeschwindigkeit ist im Vergleich mit P 25 gemäss Beispiel 16 um 84 % erhöht.

### Beispiel 18 (Dotierung mit PtO₂)

In das Vorratsgefäß und den Rührreaktor werden Dichloressigsäure und 1 g/l Katalysator gemäss Beispiel 2 in angesäuerter wässriger Suspension gegeben und wie oben angegeben behandelt. Eine TOC/TOC₀-Zeit-Kurve wird aufgenommen. Nach 206,76 min. sind 0 % des Anfangs-TOC-Gehaltes von der Dichloressigsäure vorhanden. Die Anfangsreaktionsgeschwindigkeit ist im Vergleich mit P 25 gemäss Beispiel 16 um 80 % erhöht.

### Beispiel 19 (Dotierung mit MgO)

In das Vorratsgefäß und den Rührreaktor werden Dichloressigsäure und 1 g/l Katalysator 3 in angesäuerter wässriger Suspension gegeben und wie oben angegeben behandelt. Eine TOC/TOC₀-Zeit-Kurve wird aufgenommen. Nach 200,27 min. ist 0 % des Anfangs-TOC-Gehaltes von der Dichloressigsäure vorhanden. Die Anfangsreaktionsgeschwindigkeit ist im Vergleich mit P 25 gemäss Beispiel 16 um 73 % erhöht.

### Beispiel 20 (Dotierung mit ZnO)

In das Vorratsgefäß und den Rührreaktor werden Dichloressigsäure und 1 g/l Katalysator gemäss Beispiel 4 in angesäuerter wässriger Suspension gegeben und wie oben angegeben behandelt. Eine TOC/TOC₀-Zeit-Kurve wird aufgenommen. Nach 189,73 min. sind 0 % des Anfangs-TOC-Gehaltes von der Dichloressigsäure vorhanden. Die Anfangsreaktionsgeschwindigkeit ist im Vergleich mit P 25 gemäss Beispiel 16 um 76 % erhöht.

### Beispiel 21 (Dotierung mit ZnO) (Vergleichsbeispiel)

In das Vorratsgefäß und den Rührreaktor werden Dichloressigsäure und 1 g/l Katalysator gemäss Beispiel 5 in angesäuerter wässriger Suspension gegeben und wie oben angegeben behandelt. Nach 245 min. ist ein Rest TOC/TOC₀-Wert von 14,54 % vorhanden. Es ist nach 245 min. kein vollständiger Abbau der Dichloressigsäure zu beobachten. Die Anfangsreaktionsgeschwindigkeit ist im Vergleich mit P 25 gemäss Beispiel 16 nur um 29 % erhöht.

### Beispiel 22 (TiO2)

In das Vorratsgefäß und den Rührreaktor werden Dichloressigsäure und 1 g/l Katalysator gemäss Beispiel 6 in angesäuerter wässriger Suspension gegeben und wie oben angegeben behandelt. Eine TOC/TOC₀-Zeit-Kurve wird aufgenommen. Nach 206,76 min. sind 0 % des Anfangs-TOC-Gehaltes der Dichloressigsäure vorhanden. Die Anfangsreaktionsgeschwindigkeit ist im Vergleich mit P 25 gemäss Beispiel 16 um 55 % erhöht.

**Tabelle 1: Experimentelle Bedingungen bei der Herstellung der Oxide**

| Beispiel | TiCl₄ | Primärluft | Sek. Luft | H₂ Kern | H₂ Mantel | N₂ Kern | Gas-Temp. | Salzlösung | Aerosolmenge | N₂-Aerosol | BET-Oberfläche |
|---|---|---|---|---|---|---|---|---|---|---|---|
| Nr. | [kg/h] | [Nm³ /h] | [Nm³ /h] | [Nm³ /h] | [Nm³ /h] | [Nm³ /h] | [°C] | | [g/h] | [Nm³ /h] | [m²/g] |
| 1 | 0,66 | 3,41 | 0 | 0,54 | 0,23 | 0 | 235 | 1 % AlCl₃ x 6H2O | 126,0 | 0,04 | 75 |
| 2 | 0,65 | 3,41 | 0 | 0,54 | 0,23 | 0 | 240 | 0, 5 % H₂PtCl₆ | 27,0 | 0,04 | 73 |
| 3 | 0,66 | 3,41 | 0 | 0,54 | 0,23 | 0 | 240 | 0,5 % MgCl₂ x 6H2O | 21,4 | 0,04 | 77 |
| 4 | 0,65 | 3,41 | 0 | 0,54 | 0,23 | 0 | 235 | 3 % ZnCl₂ | 31,7 | 0,04 | 78 |
| 5 | 1,32 | 2,68 | 0 | 0,33 | 0,10 | 0 | 247 | 2 % ZnCl₂ | 112,6 | 0,04 | 56 |
| 6 | 0,42 | 3,78 | 0 | 0,21 | 0,23 | 0,04 | 230 | keine Dotierung | | 0 | 82 |

| | | | | | | | | | | | |
|---|---|---|---|---|---|---|---|---|---|---|---|
| Erläuterung: Primärluft = Luftmenge im Zentralrohr; Sek. Luft = Sekundärluft; H₂ Kern = Wasserstoff im Zentralrohr; H₂ Mantel = Mantelwasserstoff; N₂ Kern = Stickstoff im Zentralrohr; Gas-Temp. = Gastemperatur in der Düse des Zentralrohres; Aerosolmenge = Massenstrom der in Aerosolform überführten Salzlösung; N₂ Aerosol = Traggasmenge (Stickstoff) des Aerosols | | | | | | | | | | | |

**Tabelle 2: Analytische Daten der nach Beispiel 1 bis 6 erhaltenen Oxide**

| Beispiel | BET-Oberfläche | Menge Dotierungskomp. | Cl Gehalt | TV | GV | pH | Stampfdichte |
|---|---|---|---|---|---|---|---|
| Nr | [m²/g] | [ppm] | [ppm] | [Gew.-%] | [Gew.-%] | [4 % Sus.] | [g/l] |
| 1 | 75 | 606 | 130 | 0,55 | 1,26 | 5,09 | 209 |
| 2 | 73 | 93 | 53 | 0,63 | 1,75 | 4,96 | 241 |
| 3 | 77 | 48 | 57 | 1,3 | 0,85 | 5,79 | 220 |
| 4 | 78 | 415 | 44 | 0,77 | 1,26 | 6,05 | 219 |
| 5 | 56 | 1270 | 1320 | 1,01 | 1,23 | 4,93 | 315 |
| 6 | 82 | / | | 0,84 | 1,79 | 5,01 | 152 |

| | | | | | | | |
|---|---|---|---|---|---|---|---|
| Erläuterung: Dotierungskomponenten (siehe Tabelle 4) in µg/g (ppm); TV = Trockenverlust (2h bei 105 °C), in Anlehnung an DIN/ISO 787/II, ASTM D 280, JIS K 5101/21); GV = Glühverlust (2h bei 1000 °C); in Anlehnung an DIN 55921, ASTM D 1208, JIS K 5101/23, bezogen auf die bei 105 °C getrocknete Substanz; Stampfdichte in Anlehnung an DIN/ISO 787/IX, JIS K 5101/18 (nicht gesiebt). | | | | | | | |

**Tabelle 3**

| Versuchsergebnisse des photokatalytischen Abbaus von 4-CP (4-Chlorphenol) mittels Titandioxid und dotierten Titandioxiden nach 300 Minuten ( min.). | | |
|---|---|---|
| | | |
| | | |
| **Beispiel** | **Katalysator** | **Rest -TOC/TOC₀ bei t = 300 min. [%]** |
| 7 | Blindversuch mit Bestrahlung (ohne TiO₂) | 89,82 |
| 8 | P25 | 20,91 |
| 9 | 1. TiO2/A1203 | 8,36 |
| 10 | 2. TiO2/PtO2 | 17,73 |
| 11 | 3. TiO2/MgO | 10,91 |
| 12 | 4. TiO2/ZnO | 9,55 |
| 13 | 5. TiO2/ZnO | 37,65 |
| 14 | 6. TiO2 | 18,18 |

**Tabelle 4**

| Versuchsergebnisse des photokatalytischen Abbaus von DCA (Dichloressigsäure) mittels Titandioxid oder dotierten Titandioxiden | | | |
|---|---|---|---|
| | | | |
| **Beispiel** | **Katalysator** | **Rest TOC/TOC₀ [%]** | **Zeit [min.]** |
| 15 | Blindversuch mit Bestrahlung (ohne TiO2) | 95,45 | 245 |
| 16 | P25 | 0 | 245 |
| 17 | 1. TiO2/Al2O3 | 0 | 201,89 |
| 18 | 2. TiO2/PtO2 | 0 | 206,76 |
| 19 | 3. TiO2/MgO | 0 | 200,27 |
| 20 | 4. TiO2/ZnO | 0 | 189,73 |
| 21 | 5. TiO2/ZnO | 14,54 | 245 |
| 22 | 6. TiO2 | 0 | 206,76 |

**Tabelle 5: Anfangsreaktionsgeschwindigkeiten der Titandioxide**

| **Katalysator** | **Dotierungs-komponente / Menge** | **BET-Oberfläche [m²/g]** | **DCA Erhöhung in % (vgl. zu P 25)** | **4-CP Erhöhung in % (vgl. zu P 25)** |
|---|---|---|---|---|
| P25 | / | 50 | 0 | 0 |
| Gemäss Beispiel 1. TiO₂ / Al₂O₃ | Al₂O₃ / 606 ppm | 75 | 84 | 51 |
| Gemäss Beispiel 2. TiO₂ / PtO₂ | PtO₂ / 93 ppm | 73 | 80 | 26 |
| Gemäss Beispiel 3. TiO₂ / MgO | MgO / 48 ppm | 77 | 73 | 36 |
| Gemäss Beispiel 4. TiO₂ / ZnO | ZnO / 415 ppm | 78 | 76 | 36 |
| Gemäss Beispiel 5. TiO₂ / ZnO | ZnO / 0,127 % | 56 | 29 | - 31(Erniedrigung) |
| Gemäss Beispiel 6. TiO₂ | / | 82 | 55 | 12 |

Reaktorvolumen: 1,71
Strahler: UVH1022 Z4 Eisendotierte
Quecksilberhochdrucklampe;
Ausschlußleistung 500 W (Heraeus)
Katalysatorkonzentration: 1 g/l
Anfangskonzentration der chlorierten Kohlenwasserstoffe: *120 mg*/*l*

Die Versuche zur Bestimmung der Anfangsreaktionsgeschwindigkeiten des photokatalytischen Abbaus der chlorierten Kohlenwasserstoffen unter UV-Bestrahlung und unter Nutzung von flammenhydrolytisch hergestellten, auch dotierten Titandioxiden werden in rein wässriger oder angesäuerter wässriger Suspension durchgeführt. Die Suspension wird ständig gerührt und kontinuierlich mit der eisendotierten Quecksilberhochdrucklampe UVH1022 Z4 bestrahlt. Eine Kühlung für die Lampe ist vorhanden, um konstante Bedingungen zu gewährleisten. Ebenso wird die Suspension durch kontinuierliches Pumpen aus Vorratsbehälter zum Reaktor und zurück und durch Kühlung auf konstanter Temperatur gehalten.

## Patentansprüche

1. Mittels Aerosol dotiertes, pyrogen mittels Flammenhydrolyse hergestelltes Titandioxid, mit einer BET-Oberfläche von 65 bis 80 m²/g, welches ein Oxid aus der Gruppe Zinkoxid, Platinoxid, Magnesiumoxid und/oder Aluminiumoxid als Dotierungskomponente in einer Menge von 40 bis 800 ppm enthält.

2. Verfahren zur Herstellung des mittels Aerosol dotierten, pyrogen hergestellten Titandioxides gemäss Anspruch 1, **dadurch gekennzeichnet, dass** man in eine Flamme, wie sie zur Herstellung von pyrogenem Titandioxid mittels Flammenhydrolyse verwendet wird, ein Aerosol einspeist, dieses Aerosol vor oder während der Reaktion mit dem Gasgemisch der Flammenhydrolyse bestehend aus Titantetrachlorid, Wasserstoff und Luft, homogen mischt, das Aerosol-Gasgemisch in einer Flamme abreagieren lässt und die entstandenen dotierten pyrogen hergestellten Oxide in bekannter Weise von dem Gasstrom abtrennt, wobei als Ausgangsprodukt des Aerosols eine Salzlösung oder Suspension, die die Komponente der zu dotierenden Substanz, die ein Metallsalz- oder Metalloidsalz oder Mischungen von beiden oder eine Suspension einer unlöslichen Metall-oder Metalloidverbindung oder einer Mischung aus beiden sein kann, enthält, dient, wobei das Aerosol durch Vernebelung mittels einer Zweistoffdüse oder durch einen Aerosolgenerator vorzugsweise nach der Ultraschallvernebelung hergestellt wird.

3. Verwendung des mittels Aerosol dotierten, pyrogen hergestellten Titandioxides gemäss Anspruch 1 als Photokatalysator.

4. Verwendung des mittels Aerosol dotierten, pyrogen hergestellten Titandioxides gemäss Anspruch 1 als Adsorbens für UV-Strahlung.

5. Verwendung des mittels Aerosol dotierten, pyrogen hergestellten Titandioxides gemäss Anspruch 1 zur Reinigung von Abwasser.

6. Verwendung des mittels Aerosol dotierten, pyrogen hergestellten Titandioxides gemäss Anspruch 1 zur Reinigung von Abluft und Abgasen.

## Claims

1. Aerosol-doped titanium dioxide prepared pyrogenically by means of flame hydrolysis, having a BET surface area of 65 to 80 m²/g and containing an oxide selected from the group consisting of zinc oxide, platinum oxide, magnesium oxide and/or aluminium oxide as doping component in an amount of 40 to 800 ppm.

2. Process for the preparation of the aerosol-doped, pyrogenically prepared titanium dioxide according to Claim 1, **characterised in that** an aerosol is fed into a flame as used for the preparation of pyrogenic titanium dioxide by means of flame hydrolysis, this aerosol is mixed homogeneously before or during the reaction with the gas mixture of the flame hydrolysis, consisting of titanium tetrachloride, hydrogen and air, the aerosol/gas mixture is allowed to react in a flame, and the resulting doped pyrogenically prepared oxides are separated from the gas stream in a known manner, there being used as the starting material for the aerosol a salt solution or suspension containing the component of the substance to be doped, which may be a metal salt or metalloid salt or mixtures of the two or a suspension of an insoluble metal or metalloid compound or a mixture of the two, the aerosol being produced by atomisation by means of a two-component nozzle or by an aerosol generator, preferably by ultrasonic atomisation.

3. Use of the aerosol-doped, pyrogenically prepared titanium dioxide according to Claim 1 as a photocatalyst.

4. Use of the aerosol-doped, pyrogenically prepared titanium dioxide according to Claim 1 as an adsorbent for UV radiation.

5. Use of the aerosol-doped, pyrogenically prepared titanium dioxide according to Claim 1 for purification of waste water.

6. Use of the aerosol-doped, pyrogenically prepared titanium dioxide according to Claim 1 for purification of waste air and waste gases.

## Revendications

1. Dioxyde de titane dopé à l'aérosol, fabriqué de manière pyrogène au moyen d'une pyrohydrolyse, ayant une surface BET allant de 65 à 80 m²/g, lequel dioxyde contient un oxydé du groupe de l'oxyde de zinc, de l'oxyde de platiné, de l'oxyde de magnésium et/ou de l'oxyde d'aluminium comme composant de dopage, en une quantité allant de 40 à 800 ppm.

2. Procédé de fabrication du dioxyde de titane dopé à l'aérosol, fabriqué de manière pyrogène selon la revendication 1, **caractérisé en ce que** l'on injecte un aérosol dans une flamme, telle qu'elle est utilisée pour la fabrication de dioxyde de titane pyrogène au moyen d'une pyrohydrolyse, cet aérosol est mélangé de manière homogène avant ou pendant la réaction avec le mélange gazeux de la pyrohydrolyse consistant en le tétrachlorure de titane, l'hydrogène et l'air, l'aérosol-mélange gazeux peut réagir dans une flamme et les oxydes dopés fabriqués de manière pyrogène en résultant sont séparés de manière connue du courant gazeux, où comme produit de départ de l'aérosol, on utilise une solution de sels ou suspension, qui contient le composant de la substance à doper, qui peut être un sel métallique ou un sel de métalloïde ou des mélanges des deux ou une suspension d'un composé métallique ou métalloïde insoluble ou un mélange des deux, l'aérosol étant fabriqué par atomisation au moyen d'une buse à deux composants ou par un générateur d'aérosol, de préférence après l'atomisation aux ultrasons.

3. Utilisation du dioxyde de titane dopé à l'aérosol, fabriqué de manière pyrogène selon la revendication 1, comme photocatalyseur.

4. Utilisation du dioxyde de titane dopé à l'aérosol, fabriqué de manière pyrogène selon la revendication 1, comme adsorbant de rayonnement UV.

5. Utilisation du dioxyde de titane dopé à l'aérosol, fabriqué de manière pyrogène selon la revendication 1, pour la purification d'eaux résiduaires.

6. Utilisation du dioxyde de titane dopé à l'aérosol, fabriqué de manière pyrogène selon la revendication 1, pour la purification d'air ou de gaz résiduaires.
